# EUROPEAN PATENT SPECIFICATION

(11) **EP 4 062 109 B1**
(45) Date of publication and mention of the grant of the patent: **05.06.2024**
(21) Application number: 20916949.9
(22) Date of filing: 29.01.2020
(51) Int. Cl.: F24C 15/32, F16B 5/02

(54) **DOMESTIC OVEN COMPRISING A REAR WALL COVER ON MUFFLE**
HAUSHALTSOFEN, DER EINE RÜCKWANDABDECKUNG AN EINER MUFFEL UMFASST
FOUR MÉNAGER COMPRENANT UN COUVERCLE DE PAROI ARRIÈRE SUR MOUFLE

(43) Date of publication of application: 28.09.2022
(73) Proprietor: Femas Metal San. Ve Tic. A.S., 38070 Melikgazi/Kayseri (TR)
(72) Inventor: DEMIRBAS, Musa, 38070 Melikgazi/Kayseri (TR); EROGLU, Erdem, 38070 Melikgazi/Kayseri (TR); DUZGUN, Ogun, 38070 Melikgazi/Kayseri (TR); AKKUS, Yahya, 38070 Melikgazi/Kayseri (TR)
(86) International application number: PCT/TR2020/050058
(87) International publication number: WO 2021/154167

(56) References cited:
- EP-A1- 1 464 898
- EP-A1- 2 372 256
- EP-A2- 1 467 154
- EP-B1- 1 464 898
- DE-A1-102006 004 384
- DE-B4- 4 430 065
- US-A1- 2016 273 780

## Description

### TECHNICAL FIELD

The present invention relates to domestic ovens having an oven muffle delimiting the cooking chamber, particularly to an oven comprising a cover element covering a fan provided at the rear wall of the muffle.

### BACKGROUND OF THE INVENTION

In domestic ovens that can cook with convection, there is a fan that provides hot air circulation on the rear wall of the muffle surrounding the cooking chamber. In order to protect the fan from external factors, for example oil and steam scattered during cooking, there is provided a cover element on which a fan protecting sheet is formed. Cover element has the structure of metal sheet on which there are air outlet holes and it is fixed to the rear wall of the muffle by means of the screw connections located at its corners.

EP2372256A1 discloses an oven muffle comprising a muffle wall having a mounting region for a fan and a plurality of through holes provided in the perimeter of the mounting region for insertion of connecting screws, and a cover element for said mounting region comprising a plurality of lugs having openings which overlap with through-holes of the muffle wall extending from cover element towards the muffle wall so as to maintain the cover element at a distance to muffle wall. According to the invention, individual extensions and muffle wall provided on the cover element have shallower and softer surface geometries for facilitating the production. According to the invention, extensions and rear wall of the muffle extend parallel to each other.

Further relevant prior art may be found in DE 44 30 065 B4.

### SUMMARY OF THE INVENTION

The object of the invention is to facilitate the mounting of the cover element of an oven that comprises an oven muffle having a fan and provides fan protection, to the rear wall.

To achieve the abovementioned objects, the invention relates to a domestic oven, comprising a muffle having a flat rear wall and lateral walls extending perpendicularly from opposite lateral edges on the rear wall, a cover element made of flat metal sheet fitted on the rear wall from a mounting portion to define a chamber that contains a circulation fan between rear wall and the cover element, and a first removable connection element formed by a projection provided on the rear wall in the mounting portion and a corresponding extension to be inserted on the cover element. In the oven, mutually facing walls of the projection and extension contacting each other are arranged in an inclined form such that they will include an angle of inclination relative to the plane of the rear wall. By means of a ventilation hole opened between the cover element and the rear wall or directly on the cover element, the air accelerated by the circulation fan behind the cover element is distributed back into the muffle from the chamber. When the cover element is mounted with the cover having an extension that contacts a projection located thereon, the heat transfer to the cover element through the muffle is only less affected in accordance with the contact area between the projection and the extension, and the risk of thermal deformation of the cover element in the oven is reduced. In this case, it is possible to use a planar cover instead of covers that are formed as a precaution to remove thermal stresses. Also, by means of the angle of inclination on the frontal surface, it will be easier to align the cover to the projections on the rear wall when mounting the cover by reaching the rear wall of the oven muffle. Then, in applications where the projections used for the connection are parallel to the plane of the rear wall, when the cover element is pushed to the rear wall, it dislocates as friction may be insufficient due to the reduced area with the front surface. While alignment of the cover element with the projection on the rear wall as the first connecting element forms by an operator is problematic, by means of the inclination angle, the first connection element, which is angled at the angle of inclination with the rear wall, provides alignment by simply pushing the cover element towards the rear wall and it becomes possible to fix the projection on the extension for example simply by screwing. This is achieved by making insertion in place easier due to the fact that the angle of inclination distributes the force applied to the cover element in the pushing direction with its component in the axial direction.

According to the invention, it comprises a second connection element having the form of a mirror-symmetry relative to an axis passing through the middle of the first connection element and the rear wall. The second connection element creates force components that push in bidirectional by holding the cover element close to the middle portion and pushing it perpendicularly towards the rear wall and provides that the cover element is promptly fastened to the rear wall through the projection.

In a preferred embodiment of the invention, the projection in the first connection element and second connection element is self-formed by forming the outside portion on the rear wall. In this way, a projection is formed during the forming of the muffle, without the need for an additional projection to be mounted on the rear wall.

In a preferred embodiment of the invention, the extension in the first connection element and second connection element is self-formed by forming the inside portion by bending the cover element inward. In this way, an extension is obtained by forming the metal sheet. The inward bending expression applies if the direction viewed after mounting on the cover element is taken outside. Thus, for example, an extension is formed in the interior with a depression form. The extension running outwards from the plane on which the cover element extends, enables the cover element and a distant element, for example the projection outward from the rear wall, to reach each other. Thus, the projection and the extension together act as a spacer. The spacer provides a chamber between the cover and the rear wall, and elements such as fan and resistor are placed in this chamber.

In a preferred embodiment of the invention, the portion of the projection facing an outer circumferential edge comprises a raised bending portion so as to provide the angle of inclination. The raised bending is obtained by forming the projection in an asymmetrical structure during cold forming. As the outward facing portion is located to be high, and the opposite inward facing portion is located to below in the projection, an angle of inward inclination is obtained.

In a preferred embodiment of the invention, the first connection element and the second connection element are provided on cover element at the corner portions in opposite directions to each other. This allows cover element to be mounted to rear wall from the corners. Since the corners are the regions where thermal deformations are most affected, the cover element is allowed to be securely attached to the rear wall by the first and second connection elements.

In a preferred embodiment of the invention, the extension comprises an outer connection hole that is thoroughly opened and the corresponding projection comprises an inner connection hole arranged to be aligned with the outer connection hole. The inner and outer connection holes allow the cover element to be fixed to the rear wall, for example by inserting a screw, by forming a connection hole from the cover element to the rear wall.

A preferred embodiment of the invention comprises a sleeve extending perpendicular to the rear wall surrounding the inner connection hole. The sleeve gives enough space for the screw threads to fit into the hole.

In a preferred embodiment of the invention, the angle of inclination is set to be as maximum 10°. The preferred value is 5°. This angle range is considered to be sufficient in that it provides an effective engagement of the extension and the projection to each other respectively in both cover element made of metal sheet and rear wall by causing minimum deformation
In a preferred embodiment of the invention, the extension is in a form of the inclined conical cup with top portion is a flat outer connection wall with the angle of inclination. With this form, the cold forming of the sheet plate is easily performed and its structural strength is protected against thermal stresses.

### BRIEF DESCRIPTION OF THE DRAWINGS

Figure 1 is a perspective view of a representative embodiment of the domestic oven of the invention with oven muffle demounted.
Figure 2 is a front view of a representative embodiment of a muffle used in the oven of the invention with cover element removed.
Figure 3 is a cross sectional view of the first connection element located at the muffle shown in Figure 2.
Figure 4 is a cross sectional view of the second connection element located at the muffle shown in Figure 2.

### DETAILED DESCRIPTION OF THE INVENTION

In this detailed description, the development of the invention has been described without any limitation and only with reference to the examples for a better explanation of the subject.

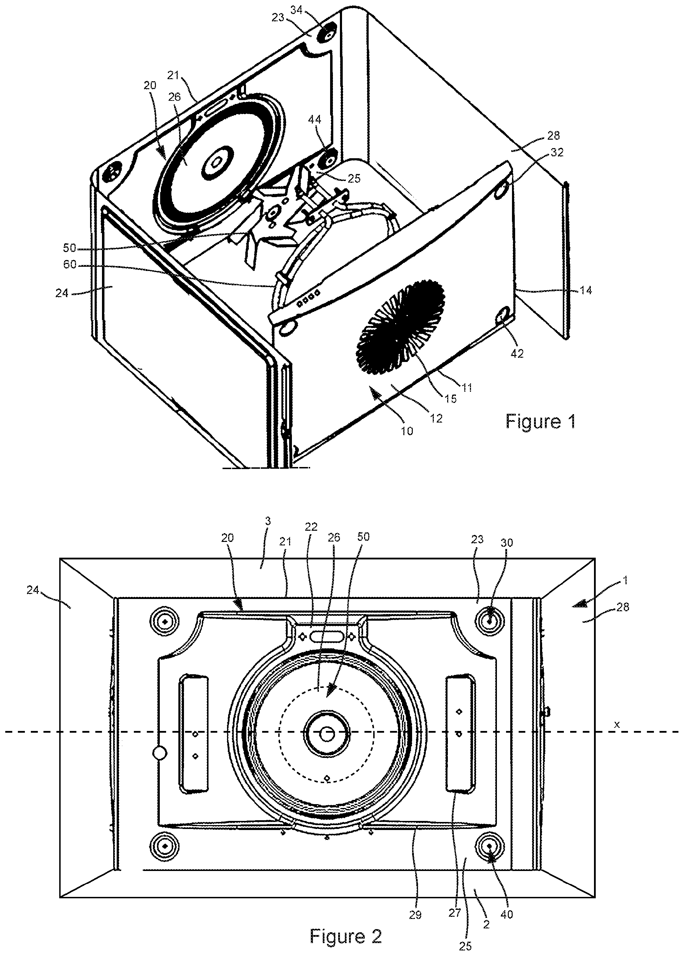

In Figure 1, a representative embodiment of a muffle (1) of a domestic oven of the invention is shown in top perspective. The muffle (1) comprises a rear wall (20) made of a flat planar metal sheet bent in U-shape and a lateral wall (24, 28) extending from both sides thereof. A circulation fan (50) and a resistor (60) surrounding it are located in a central middle portion (26) of the rear wall (20). The circulation fan (50) is rotatably driven from the rear of the muffle (1) by a fan motor (not shown) having a shaft passing through a hole located in the middle portion (26). On the other hand, the terminal ends of the circular resistor (60) surrounding the circulation fan (50) pass through the holes located on the rear wall (20) near the outer edge (21). A channel of the circular form centered on the middle portion (26) is formed on the rear wall (20). This form increases the resistance of the rear wall (20) against heat and thermal stresses from the resistor (60).

A mounting region is provided at each corner of the rear wall (20). The mounting region includes a planar upper mounting portion (23) around a projection (34) near the upper corner of the rear wall (20) and a planar lower mounting portion (25) around a projection (44) near to its lower corner.

A ventilation opening (15) is formed by opening multiple adjacent holes in the central middle portion of a cover element (10) obtained by forming from a flat metal plate. The cover element (10) is approximately equal in size and form with the rear wall (20). In the corner portions of the cover element (10), there are orifices (32, 42) opening to the projections (34, 44). The orifices (32, 42) are in the form of a circular opening. When the cover element (10) is mounted on the rear wall (20), its circumferential edge (11) overlaps with the outer edge (21) of the rear wall (20). In this way, when the cover element (10) is mounted on the rear wall (20), it completely covers the rear wall (20).

Figure 2 shows the front view of the muffle (1). The muffle (1) has a metal sheet base (2) and a top (3) adjacent to the rear wall (20) and the lateral walls (24, 28). The outer edge (21) of the rear wall (20) has the form of a rectangle. An annular bearing (22) provided in the middle portion (26) ensures that the circulation fan (50) is fixed on the rear wall (20). A curved portion (29) with rectangular-like borders is formed on the rear wall (20) at an inward distance from the outer edges (21). When the cover element (10) is mounted, the curved portion (29) provides the distance between the cover element and the rear wall (20) and increases the resistance against thermal stresses. A first connection element (30) is placed in the upper mounting portion (23) of the rear wall (20), on the other hand, a second connection element (40) is placed in the lower mounting portion (25). Pockets (27) are provided in the transverse direction inside the curved portion (29).

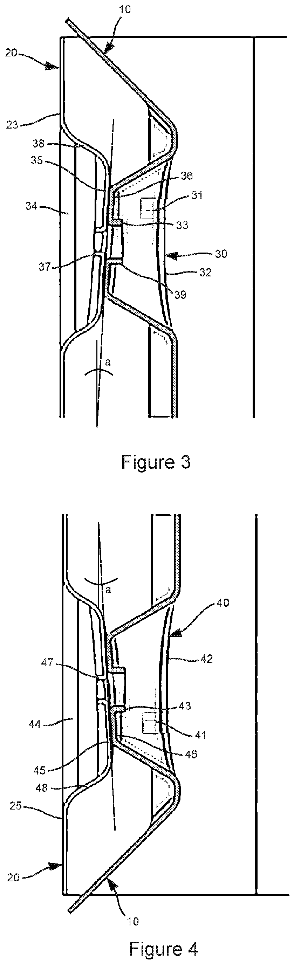

In Figure 3, the first connection element (30) is shown taken in a side section. An extension (31) is formed by bending the cover element (10) made of metal sheet in the form of a truncated cone. The inlet portion of the extension (31) of the first connection element (30) on the cover element (10) is structure of the circular orifice (32). With the narrowing of the orifice (32), the planar outer connection wall (36) is obtained. A circular outer connection hole (33) is drilled in the middle center of the outer connecting wall (36). A sleeve (39) is obtained by bending the outer connection hole (33) from its peripheral edges inwards. On the other hand, a projection (34) form is formed such that the rear wall (20) is asymmetrically depressed to have a raised bending portion (38) outward at the top and a lowered bending portion at the bottom. The outer diameter of the projection (34) and the outer diameter of the projection are approximate to each other. The end portion of the projection (34) comprises a flat inner connection wall (35) that abuts the outer connection wall (36) and is wider than the outer connection wall (36). An inner connection hole (37) narrower than the outer connection hole (33) is drilled in the middle of the inner connection wall (35). A short sleeve structure is formed by bending the inner connection hole (37) in the opposite direction to the extension direction of the projection (34). The outer connection hole (33) and the inner connection hole (37) are coaxial.

The inner connection wall (35) and the outer connection wall (36) have an inclination angle (a) of 5° relative to the extending plane of the rear wall (20) along the plane where they make frontal contact. In this case, the inner connection wall (35) and the outer connection wall (37) are angled towards the inside of the muffle (1). On the other hand, the sleeve (39) is aligned perpendicular to the rear wall (20). In this case, when the cover element (10) is mounted on the rear wall (20), an operator facing the muffle (1) can easily place the mounting screw (not shown) to sleeve (39) in way to be perpendicular to the rear wall (20) without any angle.

In Figure 4, the second connection element (40) is shown by taking a cross section in the mounting condition. The second connection element (40) has mirror symmetry with the first connection element (30) according to the horizontal axis shown in Figure 2 and dividing the rear wall (20) into two from the middle. In this way, the second connection element (40) provides an inward inclination with the angle of inclination (a) facing into the muffle (1).

An extension (41) is formed by bending the cover element (10) made of metal sheet in the form of a truncated cone. The inlet portion of the extension (41) of the second connection element (40) on the cover element (10) is structure of the circular orifice (42). With the narrowing of the orifice (42), the planar outer connection wall (46) is obtained. A circular outer connection hole (43) is drilled in the middle center of the outer connecting wall (46). A sleeve is obtained by bending the outer connection hole (43) from its peripheral edges inwards. On the other hand, a projection (44) form is formed such that the rear wall (20) is asymmetrically depressed to have a raised bending portion (48) outward at the bottom and a lowered bending portion at the top. The outer diameter of the projection (44) and the outer diameter of the projection are approximate to each other. The end portion of the projection (44) comprises a flat inner connection wall (45) that abuts the outer connection wall (46) and is wider than the outer connection wall (46). An inner connection hole (47) narrower than the outer connection hole (43) is drilled in the middle of the inner connection wall (45). A short sleeve structure is formed by bending the inner connection hole (47) in the opposite direction to the extension direction of the projection (44). The outer connection hole (43) and the inner connection hole (47) are coaxial.

The inner connection wall (45) and the outer connection wall (46) have an inclination angle (a) of 5° relative to the extending plane of the rear wall (20) along the plane where they make frontal contact. In this case, the inner connection wall (45) and the outer connection wall (47) are angled towards the inside of the muffle (1). On the other hand, the sleeve is aligned perpendicular to the rear wall (20). In this case, when the cover element (10) is mounted on the rear wall (20), an operator facing the muffle (1) can easily place the mounting screw (not shown) to sleeve in way to be perpendicular to the rear wall (20) without any angle.

As the first connection element (30) is positioned transversely with the second connection element (40), it is sufficient for the operator to push the cover element (10) forward when the cover element (10) is to be mounted. The outer connection holes (33, 43) are aligned while the cover element (10) is inserted on the end walls between the opposite outer connection walls (36, 46) and the inner connection walls (35, 45) by means of the upward angle of inclination (a) of the second connection element (40) from the bottom and downward angle of inclination (a) of the first connection element (30) from the top. Thus, the mounting of the cover element (10) to the rear wall (20) is completed by screwing through the outer connection holes (33, 43).

The extension (31) and the projection (34) ensure a distance (L) between the cover element (10) and the rear wall (20) to provide a chamber in which the circulation fan (50) will fit. Also, the mounting of the cover element (10) to the rear wall (20) is easier with the angle of inclination (a) between the extension (31) and the projection (34).

### REFERENCE NUMBERS

| | | | |
|---|---|---|---|
| 1 | Muffle | 30 | First connection element |
| 2 | Base | 31 | Extension |
| 3 | Top | 32 | Orifice |
| 10 | Cover element | 33 | Outer connection hole |
| 11 | Circumferential edge | 34 | Projection |
| 12 | Outer wall | 35 | Inner connection wall |
| 14 | Lateral edge | 36 | Outer connection wall |
| 15 | Ventilation opening | 37 | Inner connection hole |
| 20 | Rear wall | 38 | Bending portion |
| 21 | Outer edge | 39 | Sleeve |
| 22 | Bearing | 40 | Second connection element |
| 23 | Upper mounting portion | 41 | Extension |
| 24 | Lateral wall | 42 | Orifice |
| 25 | Lower mounting portion | 43 | Outer connection hole |
| 26 | Middle portion | 44 | Projection |
| 27 | Pocket | 45 | Inner connection wall |
| 28 | Lateral wall | 46 | Outer connection wall |
| 29 | Curved portion | 47 | Inner connection hole |
| a | Angle of inclination | 48 | Bending portion |
| x | Axis | 50 | Circulation fan |
| L | Distance | 60 | Resistor |

## Claims

1. A domestic oven comprising a muffle (1) having a flat rear wall (20) and lateral walls (24, 28) extending perpendicularly from the opposite lateral edges on the rear wall (20); a cover element (10) made of flat metal sheet fitted on the rear wall (20) from a mounting portion (23, 25) to define a chamber that contains a circulation fan (50) between rear wall (20) and the cover element, and a first removable connection element (30) formed by a projection (34) provided on the rear wall (20) in the mounting portion (23, 25); a corresponding extension (31) to be mounted on the cover element (10), wherein further a second connection element (40) is provided having the form of a mirror-symmetry relative to an axis (x) passing through the middle of the first connection element (30) and the rear wall (20), **characterized in that** mutually facing walls of the projection (34) and extension (31) contacting each other are arranged in an inclined form having an angle of inclination (a) relative to the plane of the rear wall (20).

2. An oven according to the claim 1, wherein the projection (34, 44) in the first connection element (30) and second connection element (40) is self-formed by forming the outside portion on the rear wall (10).

3. An oven according to the any of the preceding claims, wherein the extension (31, 41) in the first connection element (30) and second connection element (40) is formed in-situ at the inside portion by inwardly bending the cover element (10).

4. An oven according to the any one of the preceding claims, wherein the portion of the projection (34) facing an outer circumferential edge (21) is having a raised bending portion (38) so as to provide the angle of inclination (a).

5. An oven according to the any one of the preceding claims, wherein the first connection element (30) and the second connection element (40) are provided on cover element (10) at the corner portions in opposite directions to each other.

6. An oven according to the any of the preceding claims, wherein the extension (31) comprises an outer connection hole (33) that is thoroughly opened and the corresponding projection (34) comprises an inner connection hole (37) arranged to be aligned with the outer connection hole (33).

7. An oven according to claim 6, wherein a sleeve (39) extending perpendicular to the rear wall (20) is surrounding the inner connection hole (37).

8. An oven according to the any of the preceding claims, wherein the angle of inclination (a) is set to be as a maximum of 10°.

9. An oven according to the any of the preceding claims, wherein the extension (31) is in a form of the inclined conical cup with top portion is a flat outer connection wall (36) with the angle of inclination.

## Patentansprüche

1. Ein Haushaltsbackofen, der eine Muffel (1) mit einer flachen Rückwand (20) und seitlichen Wänden (24, 28) umfasst, die senkrecht von den gegenüberliegenden Seitenrändern der Rückwand (20) abragen; ein Abdeckelement (10) aus flachem Metallblech, das an der Rückwand (20) von einem Montagebereich (23, 25) angebracht ist, um eine Kammer zu definieren, die einen Umluftventilator (50) zwischen Rückwand (20) und dem Abdeckelement enthält, und ein erstes abnehmbares Verbindungselement (30), das durch eine an der Rückwand (20) im Montagebereich (23, 25) angebrachte Ausbuchtung (34) gebildet wird; eine entsprechende Erweiterung (31), die am Abdeckelement (10) montiert wird, und sich gegenüberliegende Wände der Ausbuchtung (34) und der Erweiterung (31) berühren einander in einer geneigten Form mit einem Neigungswinkel (a) relativ zur Ebene der Rückwand (20), **gekennzeichnet dadurch, dass** ein zweites Verbindungselement (40) vorgesehen ist, das spiegelsymmetrisch zu einer Achse (x) verläuft, die durch die Mitte des ersten Verbindungselements (30) und die Rückwand (20) geht.

2. Ein Backofen nach Anspruch 1, bei dem die Ausbuchtung (34, 44) im ersten Verbindungselement (30) und im zweiten Verbindungselement (40) durch Formung des äußeren Teils an der Rückwand (10) selbst gebildet ist.

3. Ein Backofen nach einem der vorangehenden Ansprüche, bei dem die Erweiterung (31, 41) im ersten Verbindungselement (30) und im zweiten Verbindungselement (40) am inneren Teil durch nach innen gerichtetes Biegen des Abdeckelements (10) gebildet ist.

4. Ein Backofen nach einem der vorangehenden Ansprüche, bei dem der Teil der Ausbuchtung (34), der einem äußeren Umfangsrand (21) zugewandt ist, einen angehobenen Biegeteil (38) aufweist, um den Neigungswinkel (a) zu bieten.

5. Ein Backofen nach einem der vorangehenden Ansprüche, bei dem das erste Verbindungselement (30) und das zweite Verbindungselement (40) am Abdeckelement (10) an den Eckteilen in entgegengesetzte Richtungen zueinander angebracht sind.

6. Ein Backofen nach einem der vorangehenden Ansprüche, bei dem die Erweiterung (31) ein äußeres Verbindungsloch (33) umfasst, das vollständig geöffnet ist, und die entsprechende Ausbuchtung (34) ein inneres Verbindungsloch (37) aufweist, das so angeordnet ist, dass es mit dem äußeren Verbindungsloch (33) ausgerichtet ist.

7. Ein Backofen nach Anspruch 6, bei dem eine Hülse (39) senkrecht zur Rückwand (20) das innere Verbindungsloch (37) umgibt.

8. Ein Backofen nach einem der vorangehenden Ansprüche, bei dem der Neigungswinkel (a) auf maximal 10° eingestellt ist.

9. Ein Backofen nach einem der vorangehenden Ansprüche, bei dem die Erweiterung (31) in Form eines geneigten konischen Bechers mit einem oberen Teil als flache äußere Verbindungswand (36) mit dem Neigungswinkel gestaltet ist.

## Revendications

1. Un four domestique comprenant un muffle (1) ayant un mur arrière plat (20) et des murs latéraux (24, 28) s'étendant perpendiculairement depuis les bords latéraux opposés sur le mur arrière (20) ; un élément de couverture (10) en tôle métallique plate monté sur le mur arrière (20) à partir d'une partie de montage (23, 25) pour définir une chambre contenant un ventilateur de circulation (50) entre le mur arrière (20) et l'élément de couverture, et un premier élément de connexion amovible (30) formé par une saillie (34) prévue sur le mur arrière (20) dans la partie de montage (23, 25) ; une extension correspondante (31) à monter sur l'élément de couverture (10) et les murs face à face de la saillie (34) et de l'extension (31) se contactant sont disposés sous une forme inclinée ayant un angle d'inclinaison (a) par rapport au plan du mur arrière (20), **caractérisé en ce que**. un second élément de connexion (40) est prévu ayant la forme d'une symétrie miroir par rapport à un axe (x) passant par le milieu du premier élément de connexion (30) et le mur arrière (20).

2. Un four selon la revendication 1, où la saillie (34, 44) dans le premier élément de connexion (30) et le second élément de connexion (40) est autoformée en formant la partie extérieure sur le mur arrière (10).

3. Un four selon l'une quelconque des revendications précédentes, où l'extension (31, 41) dans le premier élément de connexion (30) et le second élément de connexion (40) est formée in situ dans la partie intérieure en pliant vers l'intérieur l'élément de couverture (10).

4. Un four selon l'une quelconque des revendications précédentes, où la partie de la saillie (34) faisant face à un bord circonférentiel externe (21) comporte une partie pliée surélevée (38) afin de fournir l'angle d'inclinaison (a).

5. Un four selon l'une quelconque des revendications précédentes, où le premier élément de connexion (30) et le second élément de connexion (40) sont prévus sur l'élément de couverture (10) aux coins dans des directions opposées l'une à l'autre.

6. Un four selon l'une quelconque des revendications précédentes, où l'extension (31) comprend un trou de connexion extérieur (33) qui est entièrement ouvert et la saillie correspondante (34) comprend un trou de connexion intérieur (37) disposé pour être aligné avec le trou de connexion extérieur (33).

7. Un four selon la revendication 6, où un manchon (39) s'étendant perpendiculairement au mur arrière (20) entoure le trou de connexion intérieur (37).

8. Un four selon l'une quelconque des revendications précédentes, où l'angle d'inclinaison (a) est réglé pour être au maximum de 10°.

9. Un four selon l'une quelconque des revendications précédentes, où l'extension (31) est sous la forme d'un gobelet conique incliné dont la partie supérieure est un mur de connexion extérieur plat (36) avec l'angle d'inclinaison.
